# EUROPEAN PATENT SPECIFICATION

(11) **EP 1 606 472 B1**
(45) Date of publication and mention of the grant of the patent: **29.12.2010**
(21) Application number: 04722753.3
(22) Date of filing: 23.03.2004
(51) Int. Cl.: E04F 11/00

(54) **Threshold ramp with an arrangement for vertical adjustment**
Schwellenrampe mit Anordnung zur vertikalen Anpassung
Rampe pour seuil avec assemblage pour l'adjustement vertical

(30) Priority: 26.03.2003 SE 0300859
(43) Date of publication of application: 21.12.2005
(73) Proprietor: Carl Keruböö AB, 262 72 Ängelholm (SE)
(72) Inventor: ANDERSSON, Arne, S-262 62 Ängelholm (SE)
(74) Representative: Cederbom, Hans Erik August
(86) International application number: PCT/SE2004/000437
(87) International publication number: WO 2004/085761

(56) References cited:
- EP-A1- 0 960 991
- AU-B- 577 569
- DE-A1- 19 630 359
- US-A1- 2004 133 998

## Description

The present invention relates to threshold ramp with an arrangement for vertical adjustment of a part thereof, which in use is aimed to connect to a threshold in relation to a door, for handicap adaptation thereof. The reason for this is that the height of thresholds varies greatly, usually between 15 and 50 mm, but that threshold heights of up to 100 mm also occur.

In conjunction with the handicap-adaptation of dwellings, in particular dwellings in rented properties, such adaptation is often difficult to have completed or to complete, since the landlord is often unwilling to accept intervention of any type whatever being made to parts or details in the furnishing of the property, such as, for example, thresholds. At the same time, such handicap-adaptation often constitutes a measure which, for various reasons, is temporary, i.e. needs to be implemented for a person who, during a limited period of time, is obliged to live at the relevant place in a given apartment, and can do so only if such adaptation is put into effect. If, in such an event, the contemplated adaptation is, because of the nature of the intervention made in the building, rendered difficult because of the landlord's above mentioned unwillingness, the handicapped person cannot remain in residence and, instead, may become a burden for care and the care services provided by the local authority in question.

Prior art methods and apparatuses (as e.g. the one described in EP10960991) for levelling out thresholds essentially comprise the measure that a heavy duty steel sheet with high load bearing capacity (great thickness) and of a width corresponding to the width of the threshold in question is bent at the end of the metal sheet facing towards the threshold and is machined for applying bolt heads for bolts (of the French wood screw type) which are screwed in position in the threshold. Other levelling-out constructions also occur, such as, for example, in plywood. Apart from the fact that arrangements of the above mentioned type cause not inconsiderable damage to the property in question, these solutions are per se inflexible in as much as each such ramp must be customised for every individual adaption. Apart from the fact that this takes unnecessary time from the life of a perhaps seriously ill person and given that measurements must be made prior to manufacture and mounting in place, this is a costly procedure since the craftsman in question must visit every worksite at least twice. Moreover, a ramp adaptation can seldom be recovered and reclaimed after possible dismantling once the need therefore has ceased, principally because of the fact that precisely every adaptation is customised and not of standard type. Hence, there are resource losses in two stages.

It is therefore an object with the present invention to in an arrangement at a threshold ramp realise a solution which elegantly eliminates the above-mentioned problems in that it displays as good as total flexibility, at the same time as not causing damage to the property where it is positioned.

This object will be attained by means of an arrangement with which stepless adjustment may be carried out of one end of a threshold ramp located adjacent a threshold, in that the arrangement on its underside comprise at least two screw-threaded means, arranged in a guide-like groove or profile in/on which said screw-threaded means corresponding screws or alternatively nuts are adjustably screwable to a suitable length for vertical adjustment of said end point of the ramp in relation to the threshold.

The present invention will now be described in greater detail hereinbelow, with reference to the accompanying drawings which show one preferred embodiment. In the accompanying drawings:
- Fig. 1: is a cross section through one end of a ramp construction adjacent a threshold, and comprising a support foot groove;
- Fig. 2: is a view of a blind rivet nut with a screw disposed therein;
- Fig. 3: is a cross section through a complete simple ramp construction with vertically adjustable support foot; and
- Fig. 4: is a view corresponding to that of Fig. 2 according to which the screw disposed in the blind rivet nut is placed in a U-profile.

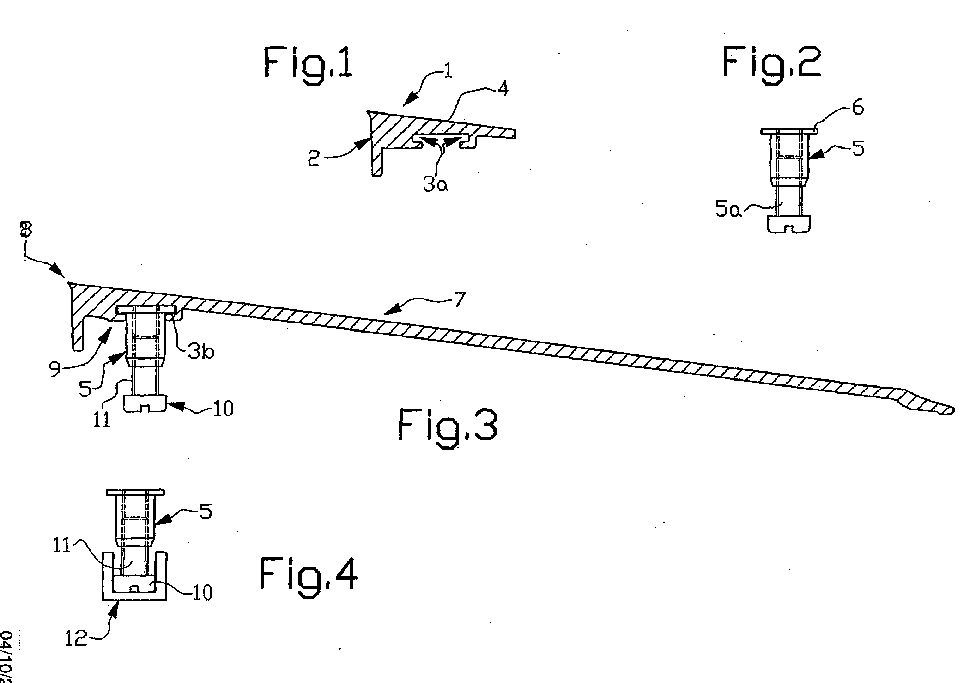

Fig. 1 shows a loose end piece 1, in this case of extruded aluminium, which may, however, be manufactured of any optional material of sufficient strength, such as steel or a suitable plastic, the end piece being intended to be fixed at one end of a threshold ramp adjacent a threshold. The end piece 1 displays a short side 2 which is intended to be disposed as closely adjacent as possible to a threshold (not shown) whose vertical difference it is the intention to level out. In its most simple form, which is not shown here, the end piece consists of a profile 3a which is guide-like in cross section and which, with appropriate fixing means such as screws, rivets or glue unions, is fixed to the underside of a ramp. The end piece 1 displays thus one longitudinal side 4 which closely abuts against the underside of the ramp.

Fig. 2 shows a so-called blind rivet nut 5 together with a fitting screw 5a screwed in position. The blind rivet nut 5 displays a flange 6 which, in its actual application after plastic deformation by means of a tool intended for this purpose, is to hold the blind rivet nut 5 fixed in a hole provided for this purpose in a metal sheet (not shown). It is thus possible with this nut 5 to arrange, in the intended application thereof, a machined thread transversely of the extent of a planar sheet metal element.

As is apparent from Fig. 3, the blind rivet nut 5 is intended to this context to be employed in a slightly special and different manner. Fig. 3 is a cross section through a threshold ramp 7 produced from extruded aluminium and intended for adjustment of the height difference between a threshold and an adjacent floor in order to realise a handicap-adaptation so that the threshold will be easier to pass over for, for example, a person using a rollator or a wheelchair. As will be apparent, the threshold ramp 7 comprises, at one end 8 thereof which is intended to be located in close contact with the threshold (not shown) which it is to even out, a guide-like profile 3b in close conjunction to the threshold and on the underside 9 thereof, the profile 3b having a construction and function which will be described below, which to all essentials are the same as in the corresponding profile 3a, and which is apparent from Fig. 1. In that it is extruded, the threshold ramp 7 may be given a cross sectional thickness profile (not shown) which is such that the loading in the material, observing a transverse force diagram, is evened out and will be uniform in the entire ramp. As will be apparent from the figure, there are at least two blind rivet nuts 5 disposed in the guide-like profile 3b, the blind rivet nuts being provided with associated screws. Unlike their normal field of use, the blind rivet nuts 5 are, in this case, not mounted with plastic deformation but are merely inserted in the profile 3b. As a result, an optional number of nuts may be utilised as required, at the same time as the large thread length of the blind rivet nuts 5 compared with conventional nuts can be utilised to the full without the associated screw "bottoming out" too early.

Last but not least, Fig. 4 shows how heads 10 on the screws 11 threaded in the blind rivet nuts are intended, so as not to damage the subjacent floor material, to be disposed in a U-shaped rail 12 in the entire width of the threshold ramp 7.

To the extent it has not been apparent above, the arrangement in the threshold ramp in question is intended to function as follows. By being produced from extrusion in aluminium, the threshold ramp 7 may be provided without major difficulty with a guide-like profile 3b on the underside thereof, which faces towards a threshold which is to be levelled out. In that it runs transversely throughout the entire threshold ramp 7, the guide profile 3b may accommodate an optional number of blind rivet nuts 5 along its length. As a result, the screws 11 disposed in the blind rivet nuts 5 may be screwed in or out in their respective positions to such an extent that each one of the screws 11 makes a contribution to carrying the load which will be able pass across the ramp while in use. In such instance, the heads 10 of the screws 11 rest in the rail 12 which, on its underside, is provided with self-adhesive tape or the like in order to fix it to the substrate. In that, moreover, the "drive-on end" 13 of the threshold ramp 7 has a specially flattened configuration with a view of facilitating drive-on, this end may also if necessary be fixed against the flooring substrate with double adhesive tape in order further to increase the safety of the arrangement according to the invention. In order to increase safety as regards adjustment safety in connection with mounting of the ramp in question, the screws 11 which are to be screwed into the blind rivet nuts 5 are provided with a friction-increasing coating whose purpose is to maintain an accurately measured and calibrated adjustment in each respective screw for fixing in conjunction with the threshold.

The present invention should not be considered ni any respect as being restricted by the illustrated embodiment, but may be modified within the scope of the appended claims.

## Claims

1. A threshold ramp (7) with an arrangement for vertical adjustment of an end part (8) thereof, which in use is aimed to connect to a threshold of a door, for handicap-adaptation of said threshold, **characterised in that**, the arrangement on its underside (9) comprise at least two screw-threaded means (5, 5a, 6, 11), arranged in a guide-like groove or profile (3a, 3b), in/on which said screw-threaded means (5, 5a, 6, 11) corresponding screws or alternatively nuts are adjustably screwable to a suitable length for vertical adjustment of said end part (8) of the ramp (7) in relation to the threshold.

2. A threshold ramp as claimed in claim 1, **characterised in that** the screw-threaded means consist of a weld nut or a weld bolt.

3. A threshold ramp according to claim 1, **characterised in that**, the screw threaded means consist of blind rivet nuts (5), loosely inserted in said guide-like groove or profile (3a, 3b).

4. A threshold ramp according to claim 3, **characterised in that** loosely screwed in screws or bolts (11) are arranged in said screw-threaded means.

5. A threshold ramp according to anyone of the preceeding claims, **characterised in that** the nuts or screws (5a, 11, 5) belonging to the arrangement, are provided with a friction-increasing coating, the purpose of which, is to realise retention of an original adjustment setting of each nut (5) or screw (11).

6. A threshold ramp according to anyone of the preceeding claims, **characterised in that** the arrangement includes a U-shaped rail (12) which can be fixed at the floor and in which the heads (10) of the screws (11) rest, once the ramp (7) has been placed in position.

## Patentansprüche

1. Schwellenrampe (7) mit einer Anordnung zur vertikalen Einstellung eines Endabschnittes (8) davon, die bei der Verwendung darauf abzielt eine Schwelle einer Tür zur behindertengerechten Anpassung zu verbinden,
**dadurch gekennzeichnet, dass**
die Anordnung auf ihrer Unterseite (9) zumindest zwei mit Schraubengewinden versehene Elemente (5, 5a, 6, 11) umfasst, die in einer führungsartigen Nut oder einem Profil (3a, 3b) angeordnet sind, in/auf das die mit Schraubengewinden versehenen Elemente (5, 5a, 6, 11), die Schrauben oder alternativ Muttern entsprechen, bis zu einer geeigneten Länge zur vertikalen Einstellung des Endabschnitts (8) der Rampe (7) in Bezug auf die Schwelle einstellbar einschraubbar sind.

2. Schwellenrampe nach Anspruch 1, **dadurch gekennzeichnet, dass** die mit Schraubengewinden versehenen Elemente aus einer Anschweißmutter oder einem Anschweißbolzen bestehen.

3. Schwellenrampe nach Anspruch 1, **dadurch gekennzeichnet, dass** die mit Schraubengewinden versehenen Elemente aus Blindnietmuttern (5), die lose in die führungsartige Nut oder das Profil (3a, 3b) eingesetzt sind, bestehen.

4. Schwellenrampe nach Anspruch 3, **dadurch gekennzeichnet, dass** lose eingeschraubte Schrauben oder Bolzen (11) in den mit Schraubengewinden versehenen Elementen angeordnet sind.

5. Schwellenrampe nach einem der vorhergehenden Ansprüche, **dadurch gekennzeichnet, dass** die Muttern oder Schrauben (5a, 11, 5), die zu der Anordnung gehören, mit einer reibungserhöhenden Beschichtung versehen sind, deren Zweck das Beibehalten einer ursprünglichen Verstelleinstellung von jeder Mutter (5) oder Schraube (11) ist.

6. Schwellenrampe nach einem der vorhergehenden Ansprüche, **dadurch gekennzeichnet, dass** die Anordnung eine U-förmige Schiene (12), die an dem Boden befestigt werden kann und in der, sobald die Rampe eingesetzt wurde, die Köpfe (10) der Schrauben (11) sitzen, umfasst.

## Revendications

1. Rampe pour seuil (7) avec agencement pour réglage vertical d'une partie d'extrémité (8) de celle-ci qui, en service, est destinée à être reliée au seuil d'une porte, pour adapter ledit seuil aux personnes handicapées, **caractérisée en ce que** l'agencement sur sa face inférieure (9) comprend au moins deux moyens à filetage (5, 5a, 6, 11), agencés en un profil ou une rainure de type guide (3a, 3b), dans/sur lesquels moyens à filetage (5, 5a, 6, 11) des vis ou des écrous correspondants peuvent être vissés, de façon réglable, sur une longueur appropriée, pour le réglage vertical de ladite partie d'extrémité (8) de la rampe (7) par rapport au seuil.

2. Rampe pour seuil selon la revendication 1, **caractérisée en ce que** les moyens à filetage consistent en un écrou à souder ou un boulon à souder.

3. Rampe pour seuil selon la revendication 1, **caractérisée en ce que** les moyens à filetage consistent en écrous de rivets aveugles (5), insérés avec jeu dans ledit profil/ladite rainure de type guide (3a, 3b).

4. Rampe pour seuil selon la revendication 3, **caractérisée en ce que** les vis ou écrous (11) vissés avec jeu sont agencés dans lesdits moyens à filetage.

5. Rampe pour seuil selon l'une quelconque des revendications précédentes, **caractérisée en ce que** les écrous ou vis (5a, 11, 5) appartenant à l'agencement sont pourvus d'un revêtement augmentant la friction dont la fonction est de fixer un réglage original de chaque écrou (5) ou vis (11).

6. Rampe pour seuil selon l'une quelconque des revendications précédentes, **caractérisée en ce que** l'agencement comprend un rail en forme de U (12) qui peut être fixé au sol et dans lequel reposent les têtes (10) des vis (11), une fois que la rampe (7) a été mise en position.
